# EUROPEAN PATENT SPECIFICATION

(11) **EP 4 269 951 B1**
(45) Date of publication and mention of the grant of the patent: **06.11.2024**
(21) Application number: 23169422.5
(22) Date of filing: 24.04.2023
(51) Int. Cl.: G01D 11/24

(54) **SENSOR HOUSING ASSEMBLY WITH A MOVEABLE HOUSING PART FOR ACCOMMODATING A SENSOR**
SENSORGEHÄUSEANORDNUNG MIT EINEM BEWEGLICHEN GEHÄUSETEIL ZUR AUFNAHME EINES SENSORS
ENSEMBLE BOÎTIER DE CAPTEUR DOTÉ D'UNE PARTIE DE BOÎTIER MOBILE DESTINÉE À RECEVOIR UN CAPTEUR

(30) Priority: 25.04.2022 IN 202241024350
(43) Date of publication of application: 01.11.2023
(73) Proprietor: TE Connectivity Germany GmbH, 64625 Bensheim (DE); TE Connectivity India Private Limited, 560048 Karnataka (IN)
(72) Inventor: Wiechert, Sebastian, Speyer (DE); Reis, Daniel, Speyer (DE); Kiranpal, Singh, Karnataka (IN); Laux, Thomas, Speyer (DE); Faas, Sven, Speyer (DE); Koch, Frank, Speyer (DE)
(74) Representative: Grünecker Patent- und Rechtsanwälte PartG mbB

(56) References cited:
- US-A1- 2012 321 519
- US-A1- 2015 075 281
- US-B2- 9 482 623

## Description

The invention in general relates to sensor housing assemblies, which are used to accommodate a sensor and allow insertion of a measurement object.

A sensor is typically used to measure properties of a measurement object. For example, a temperature sensor measures the temperature of the measurement object, a magnetic sensor may measure magnetization of an object or the alteration of a background magnetic field in the presence of the measurement object, a proximity sensor may sense the distance of the measurement object and an electric sensor may measure electric quantities such as resistance, voltage and/or current of the measurement object. For the measurement to take place, the measurement object must be put in a predetermined positional relationship with respect to the sensor.

In industry, a sensor housing assembly can be used to accommodate the sensor and protect it from the environment. The sensor housing may be attached to a support structure, which may be a car body or the frame of a machine. The sensor housing is configured to receive the measurement and to place it in a well-defined position relative to the sensor. This position depends on the type of sensor. For example, a temperature sensor may need physical contact with the measurement object, whereas a magnetic or optic sensor may be placed at a specific distance to the sensor. In general, the measurement object must be positioned in the predetermined measurement area of the sensor where the sensor is capable of sensing the physical parameter.

Prior art examples for sensor housing assemblies are given in document US 2012/0321519 A1 or document US 9,482,623 B2, in which a respective reader for determining the presence and/or amount of one or more analytes in a sample is carried by a corresponding assay device. Each of the reader in these prior art examples is adapted to receive at least a portion of the assay device in a cavity thereof. In particular, each reader comprises magnetic means for latching the assay device onto the reader within said cavity at a predetermined reading position.

However, in practical applications, the position of the measurement object may vary considerably. Thus, if the sensor housing assembly is placed at its destined position on the support, the exact position of the measurement object relative to the sensor housing may vary. This complicates the mounting of the sensor housing assembly in a manufacturing process or in the field.

It is therefore an object of the invention to provide a sensor housing assembly, which facilitates the mounting process.

According to the invention this object is solved by a sensor housing assembly that comprises a first housing part and a second housing part, wherein the second housing part comprises a sensor accommodation volume, a measurement object receptacle and an alignment funnel, the sensor accommodation volume being configured to receive a sensor, the measurement object receptacle being configured to receive a measurement object and extending along a measurement object insertion direction from adjacent to the sensor accommodation volume into the alignment funnel, the alignment funnel widening along the measurement object insertion direction in a direction which points away from the measurement object receptacle, and wherein the second housing part is moveable relative to the first housing part in at least one adjustment direction perpendicular to the measurement object insertion direction.

In this configuration, the second housing part severs as a movable sensor carrier which self-adjusts to a misaligned measurement object. The measurement object is inserted along the measurement object insertion direction first into the alignment funnel and then into the measurement object receptacle, where it is placed adjacent to the sensor accommodation volume. If the sensor is placed in the sensor accommodation volume, the measurement object in the measurement object receptacle is automatically placed in the sensor area of the sensor so that the sensor measures the respective physical parameter of the measurement object.

By having the second housing part moveable relative to the first housing part in the at least one adjustment direction, variations of the position of the measurement object are accommodated. The alignment funnel and the movable second housing part allow insertion of the measurement object even if the measurement object initially is not aligned with the measurement object receptacle in the measurement object insertion direction. The alignment funnel helps in converting a force exerted by the measurement object onto the alignment funnel into a movement in the adjustment direction.

If the measurement object is not aligned with the measurement object receptacle, it will hit the alignment funnel upon insertion and move the alignment funnel in the at least one adjustment direction until the alignment funnel is aligned with the measurement object receptacle and the measurement object thus enters the measurement object receptacle. Thus, the second housing part is self-adjusting to the position of the measurement object, while the first housing part remains stationary.

The above solution may be improved by further features. Some of these features are explained in the following. Each of the features may be added independently of the other features to the above solution. Each of the features explained below is advantageous on its own.

According to another embodiment, the length of the alignment funnel along the measurement insertion direction may be at least as long as the width of the measurement object receptacle in a direction perpendicular to the measurement object insertion direction. Even more advantageously, the length of the alignment funnel in this direction may be at least double the width. A longer alignment funnel facilitates the lateral movement perpendicular to the object insertion direction relative to the second housing part as the opening angle of the alignment funnel can be narrower to achieve a predetermined width of the alignment funnel at its distal end which is facing away from the second housing part. If space is limited, the length of the alignment funnel may be for example less than three widths.

The opening angle of the alignment funnel may be between 30° and 60° to facilitate a lateral displacement of the second housing part relative to the first housing part, if the measurement object exerts, upon insertion, a force on the alignment funnel which force is directed in the measurement object insertion direction. The alignment funnel may widen linearly, in which case the alignment funnel may have the shape of a truncated cone or pyramid. Alternatively, the alignment funnel may widen in a concave or convex shape.

The second housing part is moveable with respect to the first housing part in a plane which is perpendicular to the measurement object insertion direction. Thus, the adjustment directions, in which the first housing part is moveable, all lie within this plane. Although, in principle, the second housing part may also be moveable along the measurement object insertion direction in another embodiment, a planar movement in the plane perpendicular to the measurement object insertion direction is preferred, as this allows for well-defined forces acting on the alignment funnel if the measurement object is not aligned with the measurement object receptacle.

The sensor may be a temperature sensor, inductive sensor, proximity sensor, magnetic sensor or a Hall sensor. Depending on the sensor type and/or shape, the sensor accommodation volume may be separated by a wall from the measurement object receptacle or open into the measurement object receptacle. In the latter case, the sensor accommodation volume and the measurement object receptacle may form a continuous space. This configuration may be needed if the sensor needs physical contact with the measurement object in the measurement object receptacle.

A wall may be positioned between the sensor accommodation volume and the measurement object receptacle in other circumstances.

The sensor housing assembly may, in one embodiment, comprise a sensor spring, which is arranged between the sensor accommodation volume and the wall of the first sensor housing part. The sensor spring may be used to bias a sensor, which is arranged in the sensor accommodation volume into a defined measurement position. For example, the sensor spring may be configured to generate a spring force acting along a direction which extends from the sensor accommodation volume towards the measurement object receptacle. In such a case, the sensor spring is configured to press the sensor which is accommodated in the sensor accommodation volume against the measurement object to ensure physical contact. In an alternative embodiment, the sensor spring may be used to press the sensor against a wall of the sensor accommodation volume to ensure that the sensor has a well-defined position with respect to the measurement object receptacle.

The spring may be located in a spring shaft of the second housing part, wherein an opening of the spring shaft is accessible from the outside. This facilitates mounting of the sensor spring by simply inserting it into the spring shaft. More specifically, the spring shaft arrangement may comprise at least one spring shaft that extends in a direction perpendicular to the measurement object insertion direction. Additionally or alternatively, the at least one spring shaft may extend perpendicular to a direction in which the second housing part is inserted into the first housing part. This ensures that insertion of the sensor spring does not compromise the captive but moveable fixation between the first and the second housing part. In another embodiment, the at least one spring shaft may be accessible when the second housing part and the first housing part are assembled. This allows assembly of the sensor spring after the first and the second housing part have been mounted.

The sensor accommodation volume may have a longitudinal extension, i.e. be extended along the measurement object insertion direction. Along the measurement object insertion direction, the sensor accommodation volume may open at an end facing towards the first housing part into an interior space of the second housing part. This allows to put further components of the sensor within the first housing part, such as cables and connectors. The interior space of the first housing parts may extend beyond the sensor accommodation volume in the at least one adjustment direction. If there is a maximum adjustment distance, which defines the maximum travel of the second housing part relative to the first housing part in the at least one adjustment direction, then it may be preferred that the sensor accommodation volume opens into the interior space in all positions over the entire maximum adjustment distance. This allows, for example, that cables within the interior space of the second housing part can freely follow the movement of the sensor in the sensor accommodation volume over the entire maximum adjustment distance. For this, the cables of the sensor may be e.g. arranged in an S-bend in the interior space.

The sensor accommodation volume may have a form and/or fixation means that corresponds to the sensor that is being used. For example, the sensor accommodation volume may be a cradle, compartment and/or comprise fixing elements such as screw holes, clips and alignment structures for fixating and/or positioning the sensor in the sensor accommodation volume.

The cross-section of the alignment funnel in a direction perpendicular to the measurement object insertion may be, in one embodiment, round or polygonal. A circular and/or elliptic cross-section, is preferred however as the forces acting on the alignment funnel are more predictable.

In a further embodiment, the sensor housing assembly may comprise a guiding structure that is configured to guide the second housing part relative to the first housing part for a planar movement perpendicular to the measurement object insertion direction. The guiding structure may comprise, for example, protrusions and planes, which slide alone each other.

In another embodiment, the second housing part may be inserted into the first housing part in a direction perpendicular to the measurement object insertion direction. This has the advantage that any force generated by inserting the measurement object into the alignment funnel cannot compromise the fixation of the second housing part in the first housing part. For example, the second housing part may be located in a shaft of the first housing part. The shaft may extend and open in a direction perpendicular to the measurement object insertion direction. The shaft does not need to have solid walls, but may simply be provided by a frame structure of the first housing part.

According to another embodiment, the alignment funnel may have a proximal opening at its proximal end and a distal opening at its distal end. The proximal end may face towards the first housing part and the distal end may face away from the first housing part. The cross-section of the proximal opening may correspond to the cross-section of the measurement object receptacle.

In general, the width of the proximal opening in one of the at least one adjustment direction may be less than half, preferably less than a third of the width of the distal opening in the one adjustment direction.

If, in another embodiment, the second housing part is moveable relative to the first housing part over a predetermined maximum adjustment distance along a selected adjustment direction of the at least one adjustment direction, the difference between the width of the distal opening in the selected adjustment direction and the width of the proximal opening in the selected adjustment direction may correspond to at least half the predetermined maximum adjustment distance. This ensures that the alignment funnel covers the entire predetermined maximum adjustment distance. The self-adjustment or self-alignment feature of the alignment funnel can therefore be used in any position of the second housing part relative to the first housing part over the entire maximum adjustment distance.

In some applications, the length of the alignment funnel in the measurement object insertion direction and/or its width perpendicular to measurement object insertion direction may be limited. In such cases, it may be advisable that the difference between the widths of the distal and the proximal openings is less than double or one-and-a-half predetermined maximum adjustment distance. The distal end opens into the exterior or environment of the sensor housing assembly.

In another embodiment, the housing assembly may comprise a latching assembly, which is configured to latch the first housing assembly to the second housing assembly. This allows for an easy assembly of the sensor housing assembly and further allows to form the first and the second housing parts from molded, in particular injection molded resin parts.

In order to hold the second housing part captively, but moveably on the first housing part, the latch assembly may comprise a latching protrusion and a latching recess, where the latching protrusion extends in to the latching recess when the first and the second housing part are assembled. The latching protrusion is free to move in a direction perpendicular to the measurement object insertion direction within the latching recess. The latching protrusion may be on the first or the second housing part and the latching recess on the respective other one of the second and first housing parts. For example, the latching recess may be a shallow trough-like recess, which in the at least one adjustment direction has a width which is larger than the cross-section of the protrusion.

The latch assembly may form stops for the movement of the second housing parts relative to the first housing part in the at least one adjustment direction. For example, two opposite walls situated spaced apart in the at least one adjustment direction may form stops for the latching protrusion. The distance between the two opposing walls of the latching recess determines the maximum adjustment distance of the movement of the second housing part relative to the first housing part in the at least one adjustment direction. The shape of the latching recess may determine the maximum adjustment distances in various adjustment directions. For example, a groove-like recess may define only a linear movement of the second housing assembly relative to the first housing assembly in a single adjustment direction. A recess having a square or rectangular base area may define a range of adjustment directions which is limited to a movement within a corresponding rectangular pattern. The same holds true if the base area of the recess is polygonal, circular or elliptic.

According to another embodiment, the sensor housing assembly may comprise a centering latch, which fixates the second housing part relative to the first housing part in an initial position. This allows to define an initial position which may correspond to a position of the measurement object relative to the sensor housing assembly which is most likely, so that most probably only small adjustment movements of the alignment funnel will be necessary. The centering latch is preferably configured to have a very low release threshold so that it can be released if the measurement object presses against the alignment funnel.

For example, the measurement object may be located in a predetermined tolerance field which extends perpendicular to the measurement object insertion direction. The tolerance field has a zero position relative to which the tolerance field is defined. For example, the measurement object may be positioned within plus/minus 5mm with respect to the zero position in a direction perpendicular to the measurement object insertion direction. In such a situation, it is preferred that the intimal position corresponds to the zero position.

In another embodiment, the initial position may be located in at least one adjustment direction in a middle portion of the maximum adjustment distance, in particular at the center of the maximum adjustment distance.

The invention also relates to a measurement assembly comprising the housing assembly in one of the embodiments described above, wherein the housing assembly is mounted to a support structure. The measurement assembly further comprises the measurement object which is also mounted to the support structure.

Next, the invention will be described with reference to an exemplary embodiment making reference to the drawings. In the embodiment described, only a sample combination of the features described above is presented. If the technical effect of such a feature is not needed for a particular embodiment, the feature may be omitted. *Vice versa,* a feature that is not included in the described embodiment, but described above, may be added if the technical effect of the feature is advantageous for a specific application.

In the drawings, identical reference numbers are used for features that correspond to one another with respect to structure and/or function.

In the drawings,
Fig. 1 shows a schematic view of the parts of a sensor housing assembly;
Fig. 2 shows a schematic side view of the sensor housing assembly and a measurement object;
Fig. 3 shows a schematic cut through the sensor housing assembly of Fig. 2;
Figs. 4A to 4G show various positions of a second housing part relative to a first housing part and of a measurement object relative to the second housing part; and
Fig. 5 shows a schematic cut view for explaining an alignment process.

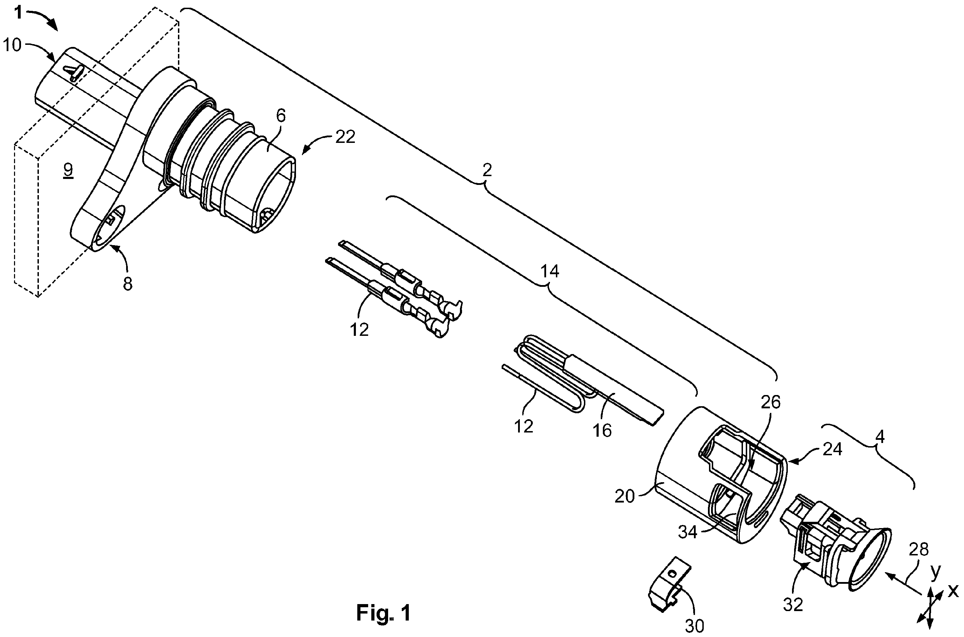

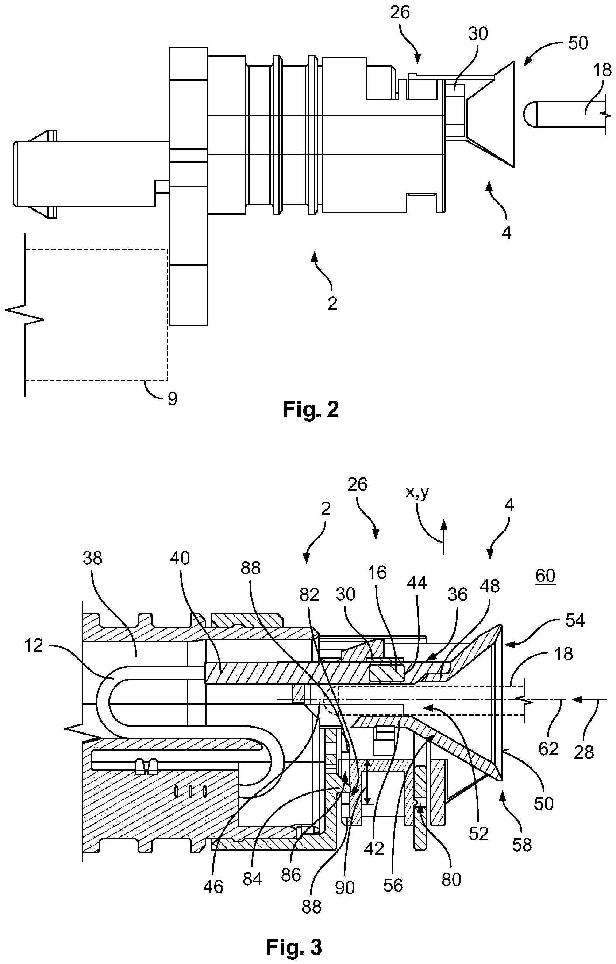

In the schematic exploded view of Fig. 1, an example of a sensor housing assembly 1, which incorporates at least parts of the invention, is shown. The sensor housing assembly 1 comprises a first housing part 2 and a second housing part 4. The first housing part 2 may comprise or consist of one or more sub-assemblies. For example, the first housing part may comprise a base 6 which has one or more fixation elements 8 for mounting the fixation element to a support structure 9, such as a car body or the frame of an industrial machine. The base may also have a connector opening 10 for receiving electric elements 12 of a sensor 14. The electric elements 12 may comprise for example connector contacts, terminals and/or signal and/or power cables. The sensor assembly 14 further comprises a sensor 16 which is configured to measure a physical property of a measurement object 18 (Fig. 2). In the embodiment shown in Fig. 1, the sensor 16 is a temperature sensor which is configured to measure the temperature of the measurement object 18. The sensor 16 is not limited to being a temperature sensor. The sensor 16 can also be a magnetic and/or electric sensor or a proximity sensor.

Just by way of example, the first housing part 2 of Fig. 1 comprises an adaptor 20 which is mounted to the base 6. Alternatively, the first housing part 2 may be unitary. In this case, the adapter 20 may be omitted and an end 22 of the base facing the second housing part 4 may be configured like the adaptor. An adaptor 20, however, may be useful to adapt the length of the sensor housing assembly 1 to different applications or to allow use of differently configured second housing parts 4 with a single first housing part 1. In these cases, the same base 6 may be used in different environments and/or with different second housing parts. The first housing part comprises a shaft 26 into which the second housing part may be inserted. The measurement object 18 is inserted into the sensor housing assembly 1 in a measurement object insertion direction 28, in which the first housing part 2 and the second housing part 4 may be arranged one behind the other. In the embodiment of Fig. 1, the second housing part 4 is inserted into the shaft 26 in a direction which is perpendicular to the measurement object insertion direction. The second housing part serves as a sensor carrier that accommodates the sensor 16. The second housing part 4 is held captively, but moveably on the first housing part 2. In particular, the second housing part 4 is moveable with respect to the first housing part 2 in at least one adjustment direction x, y, which is perpendicular to the measurement object insertion direction.

The shaft 26 provides a guiding structure, which guides the movement of the second housing part 4 in the at least one adjustment direction. At the same time, the shaft 26 limits the movement of the second housing part 4 to the at least adjustment direction by providing a support for the second housing part 4 for forces acting in the measurement object insertion direction 28 on the second housing part 4.

The sensor housing assembly 1 may further comprise a sensor spring 30 which, in the assembled state, is inserted in the second housing part 4. The sensor spring 30 may be inserted into at least one spring shaft 32 in the second housing part 4. The direction, in which the sensor spring 30 is inserted into the second housing part 4 may be perpendicular to the measurement object insertion direction 28 and also perpendicular to the direction in which the second housing part 4 is inserted into the first housing part 2. The spring shaft 32 may be accessible from the outside when the second housing part 3 is mounted to the first housing part 2, so that the sensor spring 30 may be mounted in the assembled state of the first and the second housing part. For example, the second housing part may have an opening 34 which is arranged over an opening of the shaft 32 in the assembled state of the first and the second housing part.

The sensor spring 30 is configured to bias the sensor 16 to a predetermined positon in the second housing part 4. The spring shaft 30 may be a U-shaped leaf spring, of which one leg extends is configured to abut the sensor 16 and the other leg rests against the second housing part 4.

The structure and function of the sensor housing assembly 1 will now be explained with reference to Figs. 2 and 3.

The second housing part 4 comprises a sensor accommodation volume 36 in which the sensor 16 may be accommodated. Fig. 3 shows an example, of how the sensor 16 may be received in the sensor accommodation volume.

The sensor accommodation volume 36 may extend along the measurement object insertion direction 28. Its shape should correspond to the shape of the sensor 16, so that a tight fit is ensured. The sensor accommodation volume 36 may open into an interior space 38 of the first housing part 2. The interior space 38 and the sensor accommodation volume 36 may form a continuous volume. If the sensor 16 is arranged in the sensor accommodation volume 36, a rear part 40 of the sensor 16 and/or electrical elements 12 of the sensor assembly 14 may be located in the interior space 38. For example, cables of the sensor may form an S-bend in the interior space 38.

The sensor spring 30, if present, may be arranged between the sensor accommodation volume 36 and a wall 42 of the second housing part 4. Thus, the sensor spring 30 may exert a force on the sensor 16 in the sensor accommodation volume 36 that ensures a position of the sensor 16 in which measurements can be successfully carried out. Just by way of example, the sensor spring 30 may generate a spring force 44, which acts along a direction extending from the sensor accommodation volume 36 towards a measurement object receptacle 46, in which the measurement object 18 is arranged when inserted into the sensor housing assembly 2. In the configuration shown in Fig. 3, where a temperature sensor 16 is shown, the sensor spring 30 ensures that there is physical contact between the sensor 16 and the measurement object 18 in the measurement object receptacle 46. In another configuration, the sensor spring 30 may ensure a proper working distance between the sensor 16 and the measurement object 18 e.g., by biasing the sensor 16 against one or more sensor abutment walls 48.

The measurement object receptacle 46 extends along the measurement object insertion direction 28 preferably parallel to the sensor accommodation volume 36. In the shown embodiment, the sensor accommodation volume 36 and the measurement object receptacle 46 are merged to form a joint space in the second housing part 4. In other configurations, there may be a wall between the sensor accommodation volume 36 and the measurement object receptacle 46 if, for example, a distance is required between the measurement object 18 and the sensor 16.

The measurement object receptacle 46 extends from adjacent to the sensor accommodation volume 36 in a direction away from the first housing part 2 towards an alignment funnel 50. The alignment funnel 50 comprises a proximal opening 52 and a distal opening 54. The proximal opening 52 is located at a proximal end 56 of the funnel 50. The distal opening 54 is located at a distal end 58. The proximal end 52 is located towards the first housing part 2, the distal end 58 is located facing away from the first housing part 2.

At the proximal opening 52, the (interior of) the alignment funnel 50 merges with the measurement object receptacle 46. Preferably, the cross-section of the measurement of the object receptacle 46 at the distal opening 54 corresponds to the cross-section of the proximal opening 52. The distal opening 5 connects the funnel 50 with an exterior 60 of the sensor housing assembly 1 and thus the exterior 60 with the measurement object receptacle 46. The measurement object receptacle 46, the proximal opening 52 and the proximal end 56 may be aligned along a centerline 62. The funnel 50 may be symmetric, in particular mirror-symmetric, but preferably rotationally symmetric with respect to the centerline 62.

The alignment funnel 50 may have the shape of a truncated cone or a truncated pyramid.

The cross-section of the measurement object receptacle 46 in a direction perpendicular to the measurement object insertion direction 28 is tailored to the cross-section of the measurement object. For example, if the measurement object 26 has a polygonal cross-section, the cross-section of the measurement object receptacle 46 may also be polygonal.

As stated above, the second housing part 4 is moveable with respect to the first housing part 2 in at least one adjustment direction x, y (Fig. 1). This allows the second housing part 4 to adjust to the position of the measurement object 18 with respect to the first housing part 2. Whereas the first housing part 2 may be mounted stationary to a support structure 9, the movement of the second housing part 4 may compensate for variations of the position of the measurement object 18. The adjustment funnel 50 allows to thread the measurement object 18 into the measurement object receptacle 46, even if the measurement object 18 is not aligned with the measurement object receptacle 46.

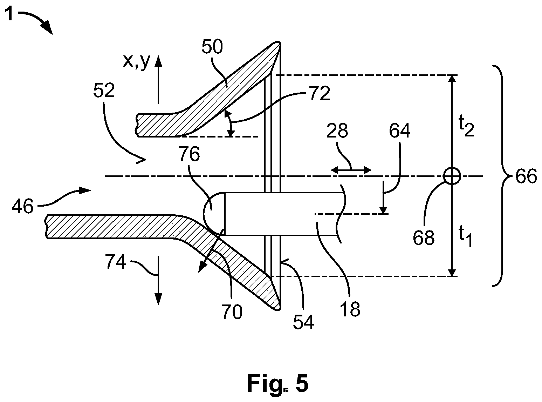

This is explained with reference to Fig. 5. In Fig. 5, it is shown that the measurement object 18 is not aligned with the measurement object receptacle 46 and/or the proximal opening 52 through which the measurement object 18 needs to enter into the measurement object receptacle 46. A position 64 of the measurement object 18 with respect to a common reference, e.g. of a support of the first housing part 2 (not shown) is located in a tolerance field 66. That means that starting from a predetermined zero position 68, the position 64 may vary within tolerances t₁, t₂, which may be different on different sides of the zero position.

If the alignment funnel 50 would be located at the zero position 68 in the configuration shown in Fig. 5, the measurement object 18 could enter directly through the proximal opening 52 into the measurement object receptacle 46. However, as the position 64 deviates from the zero position 68, the measurement object 18 will hit the funnel 50 when the sensor housing assembly 1 and the measurement object 18 are moved relative to one another along the measurement object insertion direction 28. Due to this insertion movement, a force 70 on the funnel will be generated. Depending on the friction coefficient between the measurement object 18 and the funnel 50, the force 70 will be more or less perpendicular to the funnel at the point where measurement object 18 and the alignment funnel meet. Due to the opening angle 72 of the alignment funnel 50, the force 70 will have a component 74 that is parallel to the at least one adjustment direction x, y. The second housing part 4 will be moved with respect to the first housing part 2 in the direction of the component 74 while the first housing part 2 is held stationary by the support structure 9.

The opening angle 72 of the alignment funnel may be between 30° and 60°, preferably around 45°.

The second housing part 4 will be laterally displaced upon inserting the measurement object 18 into the alignment funnel 50 until the measurement object 18 and the proximal opening 52 are aligned. Then, the measurement object 18 may slip into the measurement object receptacle 46 and be positioned adjacent to the sensor 16.

As can be seen from Fig. 5, it is beneficial if the area of the distal opening 54 covers the tolerance field 66 as, then, the measurement object 18, if properly placed within the tolerance field 66, may enter the alignment funnel. A width of the measurement object 18 perpendicular to the measurement object insertion direction 28 may need to be considered, depending on the shape of the tip 76 of the measurement object 18.

Between the proximal end 52 and the distal end 54, the funnel may widen linearly, progressively or digressively. This depends on the particular application.

As can further be seen in Fig. 3, a width of the proximal end 52 in a direction perpendicular to the measurement object insertion direction 28 may be between a half and a third of the width of the distal end 54 in this direction.

Typically, the position 64 of the measurement object 18 will be most likely around the zero position 68. For this reason and in order to keep the width of the distal opening 54 as small as possible without comprising the adjustment function of the alignment funnel 50, a centering latch 80 may be provided. The centering latch 80 may fixate the second housing part releasably with respect to the first housing part in a position which corresponds to the zero position 68 of the tolerance field 66. Thus, an initial position of the alignment funnel 50 will correspond to the zero position 68. Thus, most likely, only small movements of the alignment funnel 50 and the second housing part 4 will be required. The centering latch 80 is configured to be released easily. It only serves to maintain the initial position of the second housing part 4 relative to the first housing part 2 during normal handling of the sensor housing assembly 1 prior to insertion of the measurement object 18. It also provides a tactile feedback for a user when the second housing part 4 has reached the initial position. The centering latch 80 is released when the measurement 18 is pressed against the alignment funnel 50.

The second housing part 4 is help captively at the first housing part 2 by a latch assembly 82 which may comprise a latching protrusion 84 on one of the first housing part 2 and the second housing part 4 and a latching recess 86 on the other one of the first housing part 2 and the second housing part 4. The latching protrusion 84 extends into the latching recess 86 in which it is received moveably with respect to the at least one adjustment direction x, y. The recess 86 provides a limit stop, e.g. in the form of one or more recess walls 88, which limits movement of the second housing part 4 with respect to the first housing part 2 to a maximum adjustment distance 90. The shape of the base area of the latching recess 86, i.e. the arrangement of the recess walls 88 acting as limit stops define the possible movements of the second housing part 4 with respect to the first housing part 2 in the at least one adjustment direction. If, for example, the latching recess 86 is just a groove, only a linear movement of the second housing part 4 relative to the first housing part 2 is possible. If the latching recess 86 has a circular base area centered around the initial position, the maximum adjustment distance 90 is equal in all directions perpendicular to the measurement object insertion direction 28. The base area of the latching recess 86 may of course also be elliptic or polygonal.

The latch assembly 82 is automatically activated if the second housing part 4 is inserted into the shaft 26.

The maximum adjustment distance 90, in one embodiment may correspond to the greater one of the tolerances t₁ and t₂. If sufficient mounting space is available or there is no catering latch, it may be preferred that the maximum adjustment distance 90 corresponds to the width of the tolerance field 66, i.e. the sum of t₁ and t₂. In another embodiment, the maximum adjustment distance 90 may correspond to the width of the distal opening 54 of the alignment funnel 50 in a direction perpendicular to the measurement object insertion direction 28, preferably plus the width of the measurement object 18 in this direction.

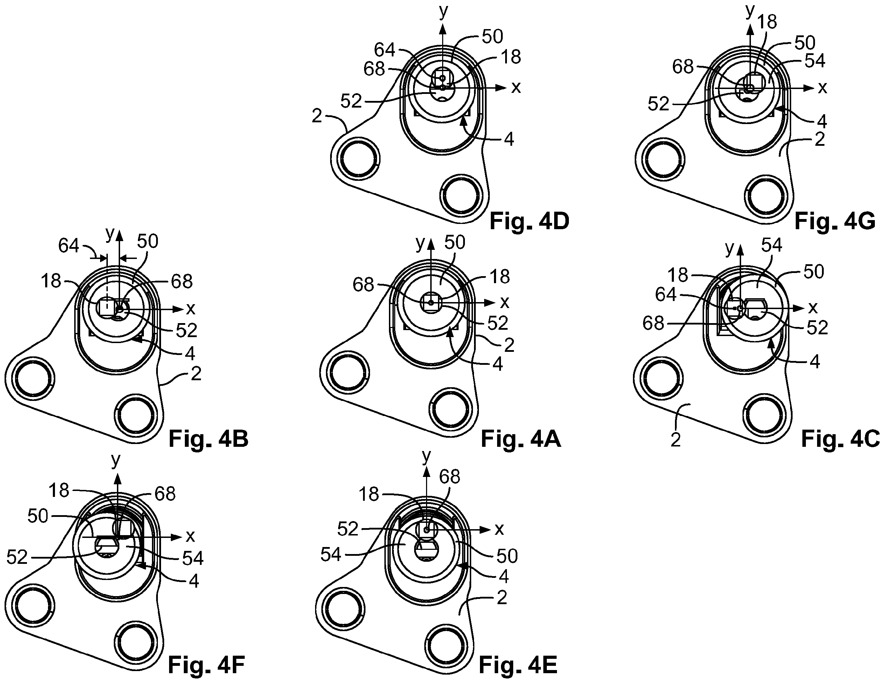

Figures 4A to 4G show the measurement object 18 at different positions 64 with respect to the zero position 68, which may correspond to the latched initial position. In Fig. 4A, the measurement object 18 is located at the zero position 68 and aligned with the proximal opening 52 of the alignment funnel 50. In this position, the measurement object 18 is aligned with the measurement object receptacle 46. Therefore, the measurement object 18 is ready to be inserted in the measurement object insertion direction 28 into the measurement object receptacle 46.

In Fig. 4B, the measurement object 18 is shifted from the zero position 68 to a position 64, for example in an x-direction, of which the orientation, however, may be arbitrary. In this configuration, the measurement object 18 cannot enter the proximal opening 52 without a shift of the second housing part 4. As was explained with reference to Fig. 5, by moving the second housing assembly 1 along the measurement object insertion direction 28 relative to the measurement object 18, the alignment funnel 50 is shifted automatically by the measurement object 18 until the proximal opening 52 is aligned with the position 64 or the measurement object 18, respectively.

In Fig. 4C, both the alignment funnel 50 and the measurement object 18 are displaced from the zero position 68. The alignment funnel 50 and the second housing part 4, respectively, are located in Fig. 4C at the limit of the maximum adjustment distance 90 in the x-direction. Additionally, the measurement object 18 is located at position 64, which may be at the end of the tolerance field 66. Thus, Fig. 4C shows an example of a maximum possible misalignment between the measurement object receptacle 46 and the measurement object 18. In Fig. 4C, the x-direction is just given exemplarily. The misalignment may be in any direction perpendicular to the measurement object insertion direction 28. As can be seen in Fig. 4C, the distal opening 54 may be configured such, that even at the maximum misalignment, the measurement object 18 may still enter the alignment funnel 50.

Fig. 4D shows a similar situation as Fig. 4B, the only difference being that the position 64 of the measurement object 18 is shifted with respect to the zero position 68 in another direction, here, the y-direction. As with Fig. 4B, the alignment funnel 50 will be displaced by the measurement object 18 upon insertion until the measurement object 18 reaches and enters the proximal opening 52.

In Fig. 4E, the alignment funnel 50 or second housing part 4, respectively, is shown at a limit of the maximum adjustment distance 90, which limit is located at the negative y-direction. The measurement object 18 is located at the zero position and may enter the alignment funnel 50. If the area of the distal opening 54 is enlarged in the y-direction, for example by forming a circle having a larger diameter or forming an ellipse with a larger diameter in the y-direction, the measurement object 18 may also be accommodated if it is located at the limit of the maximum alignment distance 90 in the positive y-direction. In Fig. 4F, the alignment funnel 50 is shown at a position at the maximum alignment distance 90, which position is located in the maximum negative x- and maximum negative y-direction. Fig. 4F shows graphically, where the measurement object 18 may be located in order to still be able to enter the distal opening 54. Again, further shifts of the measurement object 18 from the zero position 68 may be accommodated by adapting the shape of the distal opening 54.

Fig. 4G shows the alignment funnel 50 in the zero position 68 or initial position, respectively. The measurement object 18 is at the same position as in Fig. 4F and may readily enter the distal opening 54. Comparing the figures, it is clear that providing a stable initial position allows to use a smaller-sized distal opening 54 while all deviations of the position 64 of the measurement object from the zero position 68 may still enter the alignment funnel 50. This may not be the case, if the alignment funnel 50 is moved out of alignment with the zero position 68 and the position 64 is at the opposite end of the tolerance field 66, if the distal opening 54 is too small.

### REFERENCE NUMERALS

- 1: sensor housing assembly
- 2: first housing part
- 4: second housing part/sensor carrier
- 6: base
- 8: fixation element
- 9: support structure
- 10: connector opening
- 12: electric elements
- 14: sensor assembly
- 16: sensor
- 18: measurement object
- 20: adapter
- 22: end of first housing part facing the adapter
- 24: end of adapter facing the first housing part
- 26: shaft in the first housing part
- 28: measurement object insertion direction
- 30: sensor spring
- 32: shaft in second housing part
- 34: opening
- 36: sensor accommodation volume
- 38: interior space of first housing part
- 40: rear part of sensor
- 42: wall of the second housing part
- 44: spring force
- 46: measurement object receptacle
- 48: sensor abutment wall
- 50: alignment funnel
- 52: proximal opening
- 54: distal opening
- 56: proximal end
- 58: distal end
- 60: exterior
- 62: center line
- 64: position of measurement object in tolerance field
- 66: tolerance field
- 68: zero position of tolerance field
- 70: force acting on the alignment funnel
- 72: opening angle
- 74: component of force perpendicular to measurement insertion direction
- 76: tip of measurement object
- 80: centering latch
- 82: latch assembly
- 84: latch protrusion
- 86: latch recess
- 88: recess wall/limit stop
- 90: maximum adjustment distance
- x, y: adjustment direction
- t₁, t₂: tolerances

## Claims

1. Sensor housing assembly (1), the sensor housing assembly (1) comprising a first housing part (2) and a second housing part (4), wherein the second housing part (4) comprises a sensor accommodation volume (36), a measurement object receptacle (46) and an alignment funnel (50), the sensor accommodation volume (36) being configured to receive a sensor (16), the measurement object receptacle (46) being configured to receive a measurement object (18) and extending along a measurement object insertion direction (28) from adjacent the sensor accommodation volume (36) into the alignment funnel (50), the alignment funnel (50) widening along the measurement object insertion direction (28) in a direction which points away from the measurement object receptacle (46), and wherein, in an assembled state, the second housing part (4) is movable relative to the first housing part (2) in at least one adjustment direction (x, y) perpendicular to the measurement object insertion direction (28).

2. Sensor housing assembly (1) according to claim 1, wherein the sensor housing assembly (1) further comprises a guiding structure, which is configured to guide the second housing part (4) relative to the first housing part (2) in a planar movement perpendicular to the measurement object insertion direction (28).

3. Sensor housing assembly (1) according to claim 1 or 2, wherein the second housing part (4) is located in a shaft (26) of the first housing part (2).

4. Sensor housing assembly (1) according to any one of claims 1 to 3, wherein the alignment funnel (50) has a proximal opening (52) at its proximal end (56) and a distal opening (54) at its distal end (58), the proximal end (56) facing towards the measurement object receptacle (46) and the distal end (58) facing away from the measurement object receptacle (46), wherein, along a selected adjustment direction of the at least one adjustment direction (x, y), the second housing part (4) is moveable with respect to the first housing part (2) over a predetermined maximum adjustment distance (90), and wherein a difference between the width of the distal opening (54) in the selected adjustment direction and the width of the proximal opening (52) in the selected adjustment direction corresponds to at least half the predetermined maximum adjustment distance.

5. Sensor housing assembly (1) according to any one of claims 1 to 4, wherein the sensor accommodation volume (36) opens into the measurement object receptacle (46) along the measurement object insertion direction (28).

6. Sensor housing assembly (1) according to any one of claims 1 to 5, wherein the sensor housing assembly (1) comprises a sensor spring (30) which is arranged between the sensor accommodation volume (36) and a wall of the second sensor housing (4).

7. Sensor housing assembly (1) according to claim 6, wherein the sensor spring (30) is configured to generate a spring force (44) acting along a direction which extends from the sensor accommodation volume (36) towards the measurement object receptacle (46).

8. Sensor housing assembly (1) according to any one of claims 1 to 7, wherein the first housing part (2) comprises an interior space (38) into which the sensor accommodation volume (36) opens along the measurement object insertion direction (28).

9. Sensor housing assembly (1) according to claim 8, wherein the interior space (38) extends beyond the sensor accommodation volume (36) in the at least one adjustment direction (x, y).

10. Sensor housing assembly (1) according to any one of claims 1 to 9, wherein the sensor housing assembly (1) comprises a latching assembly (82) which is configured to latch the second housing assembly (4) to the first housing assembly (2).

11. Sensor housing assembly (1) according to claim 10, wherein the latch assembly (82) comprises a latching protrusion (84) and a latching recess (86), wherein the latching protrusion (84) is free to move in a direction perpendicular to the measurement object insertion direction (28) within the latching recess (86) for a predetermined distance.

12. Sensor housing assembly (1) according to any one of claims 1 to 11, wherein a centering latch (80) is provided which fixates the second housing part (4) relative to the first housing part (2) in a predefined initial position.

13. Sensor housing assembly (1) according to any one of claims 1 to 12, wherein the first housing part (2) is configured to be mounted to a support structure (9).

14. Measurement assembly comprising the sensor housing assembly (1) according to any one of claims 1 to 13, wherein the sensor housing assembly (1) is mounted to a support structure (9), the measurement assembly further comprising a measurement object (18) mounted on the support structure (9), wherein the measurement object (18) is arranged at a position (64) relative to the sensor housing assembly (1), which position (64) is located in a predetermined tolerance field, which extends perpendicular to the measurement object insertion direction (28).

15. Measurement assembly according to claim 14 and comprising the sensor housing assembly (1) of claim 12, wherein the initial position is at the zero position (68) of the tolerance field (66).

## Patentansprüche

1. Sensorgehäuseanordnung (1), wobei die Sensorgehäuseanordnung (1) ein erstes Gehäuseteil (2) und ein zweites Gehäuseteil (4) umfasst, wobei das zweite Gehäuseteil (4) ein Sensoraufnahmevolumen (36), eine Messobjektaufnahme (46) und einen Ausrichttrichter (50) umfasst, das Sensoraufnahmevolumen (36) zur Aufnahme eines Sensors (16) ausgebildet, die Messobjektaufnahme (46) zur Aufnahme eines Messobjekts (18) ausgebildet und sich entlang einer Messobjekt-Einführrichtung (28) von benachbart dem Sensoraufnahmevolumen (36) in den Ausrichttrichter (50) erstreckend, der Ausrichttrichter (50) sich entlang der Messobjekt-Einführrichtung (28) in einer Richtung erweiternd, die von der Messobjektaufnahme (46) wegweist, und wobei das zweite Gehäuseteil (4) in einem zusammengebauten Zustand relativ zu dem ersten Gehäuseteil (2) in mindestens einer Verstellrichtung (x, y) senkrecht zur Messobjekt-Einführrichtung (28) bewegbar ist.

2. Sensorgehäuseanordnung (1) nach Anspruch 1, wobei die Sensorgehäuseanordnung (1) ferner eine Führungsstruktur umfasst, die so konfiguriert ist, dass sie das zweite Gehäuseteil (4) relativ zum ersten Gehäuseteil (2) in einer planaren Bewegung senkrecht zur Messobjekt-Einführrichtung (28) führt.

3. Sensorgehäuseanordnung (1) nach Anspruch 1 oder 2, wobei das zweite Gehäuseteil (4) in einem Schacht (26) des ersten Gehäuseteils (2) angeordnet ist.

4. Sensorgehäuseanordnung (1) nach einem der Ansprüche 1 bis 3, wobei der Ausrichttrichter (50) an seinem proximalen Ende (56) eine proximale Öffnung (52) und an seinem distalen Ende (58) eine distale Öffnung (54) aufweist, das proximale Ende (56) der Messobjektaufnahme (46) zugewandt und das distale Ende (58) von der Messobjektaufnahme (46) abgewandt, wobei das zweite Gehäuseteil (4) entlang einer ausgewählten Verstellrichtung der mindestens einen Verstellrichtung (x, y) in Bezug auf das erste Gehäuseteil (2) über eine vorbestimmte maximale Verstellstrecke (90) bewegbar ist, und wobei eine Differenz zwischen der Breite der distalen Öffnung (54) in der ausgewählten Verstellrichtung und der Breite der proximalen Öffnung (52) in der ausgewählten Verstellrichtung mindestens der Hälfte der vorbestimmten maximalen Verstellstrecke entspricht.

5. Sensorgehäuseanordnung (1) nach einem der Ansprüche 1 bis 4, wobei das Sensoraufnahmevolumen (36) in die Messobjektaufnahme (46) entlang der Messobjekt-Einführrichtung (28) mündet.

6. Sensorgehäuseanordnung (1) nach einem der Ansprüche 1 bis 5, wobei die Sensorgehäuseanordnung (1) eine Sensorfeder (30) umfasst, die zwischen dem Sensoraufnahmevolumen (36) und einer Wand des zweiten Sensorgehäuses (4) angeordnet ist.

7. Sensorgehäuseanordnung (1) nach Anspruch 6, wobei die Sensorfeder (30) so konfiguriert ist, dass sie eine Federkraft (44) erzeugt, die entlang einer Richtung wirkt, die sich von dem Sensoraufnahmevolumen (36) in Richtung der Messobjektaufnahme (46) erstreckt.

8. Sensorgehäuseanordnung (1) nach einem der Ansprüche 1 bis 7, wobei das erste Gehäuseteil (2) einen Innenraum (38) aufweist, in den sich das Sensoraufnahmevolumen (36) entlang der Messobjekt-Einführrichtung (28) öffnet.

9. Sensorgehäuseanordnung (1) nach Anspruch 8, wobei sich der Innenraum (38) in der mindestens einen Verstellrichtung (x, y) über das Sensoraufnahmevolumen (36) hinaus erstreckt.

10. Sensorgehäuseanordnung (1) nach einem der Ansprüche 1 bis 9, wobei die Sensorgehäuseanordnung (1) eine Verriegelungsanordnung (82) umfasst, die zum Verriegeln der zweiten Gehäuseanordnung (4) mit der ersten Gehäuseanordnung (2) konfiguriert ist.

11. Sensorgehäuseanordnung (1) nach Anspruch 10, wobei die Verriegelungsanordnung (82) einen Verriegelungsvorsprung (84) und eine Verriegelungsaussparung (86) umfasst, wobei der Verriegelungsvorsprung (84) frei ist, sich in einer Richtung senkrecht zur Messobjekt-Einführrichtung (28) innerhalb der Verriegelungsaussparung (86) über eine vorbestimmte Strecke zu bewegen.

12. Sensorgehäuseanordnung (1) nach einem der Ansprüche 1 bis 11, wobei ein Zentrierriegel (80) vorgesehen ist, der das zweite Gehäuseteil (4) relativ zum ersten Gehäuseteil (2) in einer vorgegebenen Ausgangsposition fixiert.

13. Sensorgehäuseanordnung (1) nach einem der Ansprüche 1 bis 12, wobei das erste Gehäuseteil (2) zur Montage an einer Trägerstruktur (9) ausgebildet ist.

14. Messanordnung mit der Sensorgehäuseanordnung (1) nach einem der Ansprüche 1 bis 13, wobei die Sensorgehäuseanordnung (1) an einer Trägerstruktur (9) befestigt ist, die Messanordnung ferner ein an der Trägerstruktur (9) befestigtes Messobjekt (18) umfasst, wobei das Messobjekt (18) an einer Position (64) relativ zur Sensorgehäuseanordnung (1) angeordnet ist, wobei die Position (64) sich in einem vorbestimmten Toleranzfeld befindet, das sich senkrecht zur Messobjekt-Einführrichtung (28) erstreckt.

15. Messanordnung nach Anspruch 14, und die Sensorgehäuseanordnung (1) nach Anspruch 12 umfassend, wobei die Ausgangsposition in der Nullposition (68) des Toleranzfeldes (66) liegt.

## Revendications

1. Ensemble de logement de capteur (1), l'ensemble de logement de capteur (1) comprenant une première partie de boîtier (2) et une deuxième partie de boîtier (4), dans lequel la deuxième partie de boîtier (4) comprend un volume de logement de capteur (36), un réceptacle d'objet de mesure (46) et un entonnoir d'alignement (50), le volume de logement de capteur (36) étant configuré pour recevoir un capteur (16), le réceptacle d'objet de mesure (46) étant configuré pour recevoir un objet de mesure (18) et s'étendant selon une direction d'insertion d'objet de mesure (28) à partir du volume de logement de capteur (36) adjacent dans l'entonnoir d'alignement (50), l'entonnoir d'alignement (50) s'élargissant selon la direction d'insertion d'objet de mesure (28) dans une direction qui pointe à l'opposé du réceptacle d'objet de mesure (46), et dans lequel, à l'état assemblé, la deuxième partie de boîtier (4) est mobile par rapport à la première partie de boîtier (2) dans au moins une direction de réglage (x, y) perpendiculaire à la direction d'insertion d'objet de mesure (28).

2. Ensemble de logement de capteur (1) selon la revendication 1, dans lequel l'ensemble de logement de capteur (1) comprend en outre une structure de guidage, qui est configurée pour guider la deuxième partie de boîtier (4) par rapport à la première partie de boîtier (2) dans un mouvement planaire perpendiculaire à la direction d'insertion d'objet de mesure (28).

3. Ensemble de logement de capteur (1) selon la revendication 1 ou 2, dans lequel la deuxième partie de boîtier (4) est située dans un arbre (26) de la première partie de boîtier (2).

4. Ensemble de logement de capteur (1) selon l'une quelconque des revendications 1 à 3, dans lequel l'entonnoir d'alignement (50) comporte une ouverture proximale (52) à son extrémité proximale (56) et une ouverture distale (54) à son extrémité distale (58), l'extrémité proximale (56) étant tournée vers le réceptacle d'objet de mesure (46) et l'extrémité distale (58) étant tournée à l'opposé du réceptacle d'objet de mesure (46), dans lequel, selon une direction de réglage sélectionnée de ladite au moins une direction de réglage (x, y), la deuxième partie de boîtier (4) est mobile par rapport à la première partie de boîtier (2) sur une distance de réglage maximale prédéterminée (90), et dans lequel une différence entre la largeur de l'ouverture distale (54) dans la direction de réglage sélectionnée et la largeur de l'ouverture proximale (52) dans la direction de réglage sélectionnée correspond à au moins la moitié de la distance de réglage maximale prédéterminée.

5. Ensemble de logement de capteur (1) selon l'une quelconque des revendications 1 à 4, dans lequel le volume de logement de capteur (36) s'ouvre dans le réceptacle d'objet de mesure (46) selon la direction d'insertion d'objet de mesure (28).

6. Ensemble de logement de capteur (1) selon l'une quelconque des revendications 1 à 5, dans lequel l'ensemble de logement de capteur (1) comprend un ressort de capteur (30) qui est agencé entre le volume de logement de capteur (36) et une paroi du deuxième logement de capteur (4).

7. Ensemble de logement de capteur (1) selon la revendication 6, dans lequel le ressort de capteur (30) est configuré pour générer une force de ressort (44) agissant selon une direction qui s'étend du volume de logement de capteur (36) vers le réceptacle d'objet de mesure (46).

8. Ensemble de logement de capteur (1) selon l'une quelconque des revendications 1 à 7, dans lequel la première partie de boîtier (2) comprend un espace intérieur (38) dans lequel le volume de logement du capteur (36) s'ouvre selon la direction d'insertion d'objet de mesure (28).

9. Ensemble de logement de capteur (1) selon la revendication 8, dans lequel l'espace intérieur (38) s'étend au-delà du volume de logement de capteur (36) dans ladite au moins une direction de réglage (x, y).

10. Ensemble de logement de capteur (1) selon l'une quelconque des revendications 1 à 9, dans lequel l'ensemble de logement de capteur (1) comprend un ensemble de verrouillage (82) qui est configuré pour verrouiller le deuxième ensemble de boîtier (4) au premier ensemble de boîtier (2).

11. Ensemble de logement de capteur (1) selon la revendication 10, dans lequel l'ensemble de verrou (82) comprend une protubérance de verrouillage (84) et un renfoncement de verrouillage (86), dans lequel la protubérance de verrouillage (84) est libre de se déplacer dans une direction perpendiculaire à la direction d'insertion d'objet de mesure (28) dans le renfoncement de verrouillage (86) sur une distance prédéterminée.

12. Ensemble de logement de capteur (1) selon l'une quelconque des revendications 1 à 11, dans lequel est pourvu un verrou de centrage (80) qui fixe la deuxième partie de boîtier (4) par rapport à la première partie de boîtier (2) dans une position initiale prédéfinie.

13. Ensemble de logement de capteur (1) selon l'une quelconque des revendications 1 à 12, dans lequel la première partie de boîtier (2) est configurée pour être montée sur une structure de support (9).

14. Ensemble de mesure comprenant l'ensemble de logement de capteur (1) selon l'une quelconque des revendications 1 à 13, dans lequel l'ensemble de logement de capteur (1) est monté sur une structure de support (9), l'ensemble de mesure comprenant en outre un objet de mesure (18) monté sur la structure de support (9), dans lequel l'objet de mesure (18) est agencé à une position (64) relative à l'ensemble de logement de capteur (1), ladite position (64) étant située dans un champ de tolérance prédéterminé qui s'étend perpendiculairement à la direction d'insertion d'objet de mesure (28).

15. Ensemble de mesure selon la revendication 14 et comprenant l'ensemble de logement de capteur (1) selon la revendication 12, dans lequel la position initiale est à la position zéro (68) du champ de tolérance (66).
